## Europäisches Patentamt

## European Patent Office

## Office européen des brevets

(11) Veröffentlichungsnummer: **0 084 390**
**B1**

# EUROPÄISCHE PATENTSCHRIFT

(45) Veröffentlichungstag der Patentschrift:
**03.09.86**

(51) Int. Cl.⁴: **G 01 W 1/14,** G 01 B 11/06

(21) Anmeldenummer: **83200031.9**

(22) Anmeldetag: **11.01.83**

(54) **Verfahren und Einrichtung zum Messen der Höhe einer Schneedecke.**

(30) Priorität: **15.01.82 CH 245/82**

(43) Veröffentlichungstag der Anmeldung:
**27.07.83 Patentblatt 83/30**

(45) Bekanntmachung des Hinweises auf die Patenterteilung:
**03.09.86 Patentblatt 86/36**

(84) Benannte Vertragsstaaten:
**DE FR SE**

(56) Entgegenhaltungen:
**DE-B-1 773 094**
**DE-B-2 054 084**
**DE-B-2 243 609**

(73) Patentinhaber: **Boschung Mecatronic AG, Ried, CH-3185 Schmitten (CH)**

(72) Erfinder: **Boschung, Marcel, Ried, CH- 3185 Schmitten (CH)**
Erfinder: **Schmutz, Beat, Peterstrasse 25, CH- 3186 Düdingen (CH)**

(74) Vertreter: **Schweizer, Hans, Bovard AG Patentanwälte VSP Optingenstrasse 16, CH- 3000 Bern 25 (CH)**

LIBER, STOCKHOLM 1986

## Beschreibung

Die Erfindung betrifft ein Verfahren gemäss dem Oberbegriff des Patentanspruches 1 und eine Einrichtung gemäss dem Oberbegriff des Patentanspruches 4.

Zum Ueberwachen des gefallenen Neuschnees ist aus der DE-Patentschrift Nr. 1 773 094 eine Schneefallwarneinrichtung bekannt, die ein Signal abgibt, sobald eine einstellbare Schneehöhe erreicht ist. Diese Einrichtung umfasst eine starr angeordnete Lichtschranke mit einer Lichtquelle und einer Photozelle sowie einen Tisch, dessen Höhe bezüglich der Lichtschranke einstellbar ist. Wenn beispielsweise der Tisch so eingestellt wird, dass sich die Oberfläche des Tisches 3 cm unter der Lichtschranke befindet und die auf den Tisch fallende Schneemenge so gross ist, dass die Lichtschranke anspricht, wird ein Warnsignal ausgelöst. Diese bekannte Warneinrichtung arbeitet soweit sehr zufriedenstellend, besitzt aber den Nachteil, dass, wenn bei einem erneuten Schneefall wieder ein Warnsignal ausgelöst werden soll, dass dann entweder der Tisch vom daraufliegenden Schnee befreit oder der Tisch nach unten verstellt werden muss. Zum Ausführen dieser Arbeit ist es notwendig, dass sich eine Person zu der im Freien aufgestellten Warneinrichtung begibt. Abgesehen davon erzeugt die bekannte Warneinrichtung erst dann ein Warnsignal, wenn die Schneehöhe einen voraus einstellbaren Wert bereits erreicht hat. Es ist nicht möglich, den Beginn des Schneefalls zu ermitteln.

Es ist Aufgabe der Erfindung ein Verfahren anzugeben und eine Einrichtung zu schaffen, bei welcher es nicht notwendig ist, nach jedem Schneefall den bereits vorher gefallenen Schnee wegzuräumen und die ermöglicht, den Beginn des Schneefalles anzuzeigen.

Das erfindungsgemässe Verfahren ist durch die im kennzeichnenden Teil des Patentanspruches 1 angeführten Merkmale gekennzeichnet.

Die erfindungsgemässe Einrichtung ist durch die im kennzeichnenden Teil des Patentanspruches 4 angeführten Merkmale gekennzeichnet.

Ausführungsbeispiele der Erfindung sind nachstehend mit Bezugnahme auf die Zeichnung näher erläutert. Es zeigen

Fig. 1 die schematische Darstellung der Seitenansicht eines Sendeteiles eines Ausführungsbeispieles der erfindungsgemässen Einrichtung

Fig. 2 einen Schnitt durch eine temperaturempfindliche Sonde der Einrichtung gemäss der Fig.

Fig. 3 einen Schnitt durch eine lichtempfindliche Sonde der Einrichtung gemäss der Fig. 1,

Fig. 4 das Blockschema des Sendeteiles,

Fig. 5 einen Stromkreis zum Erzeugen eines Detektionssignales in Abhängigkeit der temperaturempfindlichen Sonde nach der Fig. 2,

Fig. 6 einen weiteren Stromkreis zum Erzeugen eines Detektionssignals in Abhängigkeit der lichtempfindlichen Sonde nach der Fig. 3,

Fig. 7 einen Stromkreis zum Erzeugen eines weiteren Detektionssignales in Abhängigkeit des auf die Sonde ausgeübten mechanischen Druckes,

Fig. 8 das Blockschema des Empfangsteiles eines Ausführungsbeispiels der erfindungsgemässen Einrichtung und

Fig. 9 ein Flussdiagramm, welches die Arbeitsweise des Empfangsteiles darstellt.

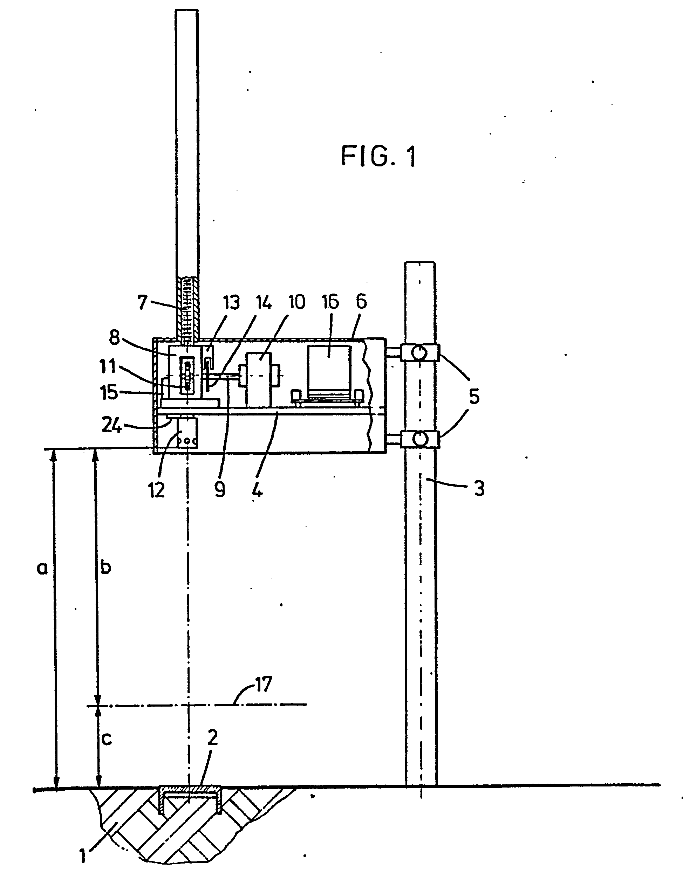

Die Fig. 1 zeigt den Sendeteil eines Ausführungsbeispiels der erfindungsgemässen Einrichtung. Im Boden ist eine Referenzplatte 2 eingelassen. An einer im Boden 1 verankerten Säule 3 ist eine Montageplatte 4 mittels Briden 5 befestigt. Die Montageplatte 4 ist in einem unten offenen Gehäuse 6 angeordnet. Vom Gehäuse 6 sind nur die Umrisse angedeutet.

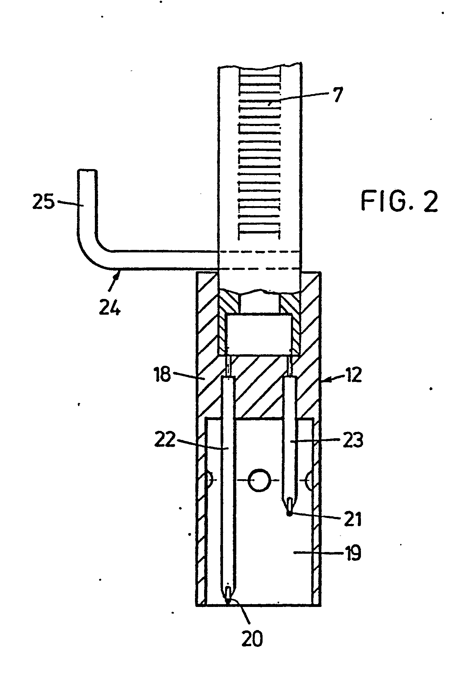

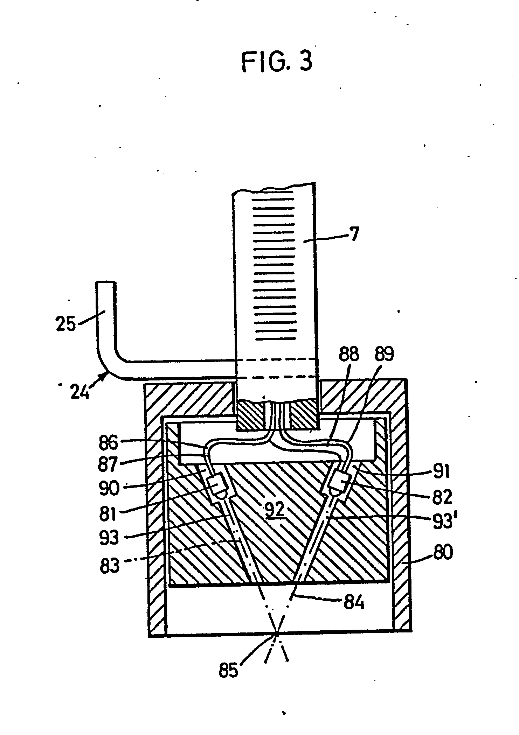

Durch das Gehäuse 6 und die Montageplatte 4 hindurch erstreckt sich eine vorzugsweise vertikal angeordnete Zahnstange 7. Die Zahnstange 7 ist in einem an der Montageplatte 4 befestigten Lagerbock 8 verschiebbar gelagert. Quer durch den Lagerbock 8 hindurch erstreckt sich eine Antriebswelle 9, die durch einen vorzugsweise mit einem Untersetzungsgetriebe versehenen Motor 10 antreibbar ist. Auf die Antriebswelle 9 ist ein in die Verzahnung der Zahnstange 7 eingreifendes Zahnrad 11 drehfest aufgesetzt. Die Zahnstange 7 kann je nach Drehrichtung des Motors 10 nach unten bzw. nach oben verschoben werden. Am unteren Ende der Zahnstange 7 ist eine auf Temperaturunterschiede ansprechende Sonde 12 oder eine auf reflektiertes Licht ansprechende Sonde 12' angeordnet, die weiter unten mit Bezug auf die Fig. 2 bzw. 3 näher beschrieben sind.

Weiter sind Mittel zum Erzeugen von elektrischen Signalen in Abhängigkeit der Verschiebebewegung der Sonde 12 bzw. der Zahnstange 7 vorhanden. Diese Mittel umfassen eine an dem Lagerbock befestigte Lichtschranke 13 und eine drehfest auf die Antriebswelle 9 aufgesetzte Lochscheibe 14. Die Lichtschranke 13 könnte auch so angeordnet sein, dass sich die Zähne der Zahnstange 7 durch die Lichtschranke hindurcherstrecken. In diesem Fall könnte auf die Lochscheibe 14 verzichtet werden.

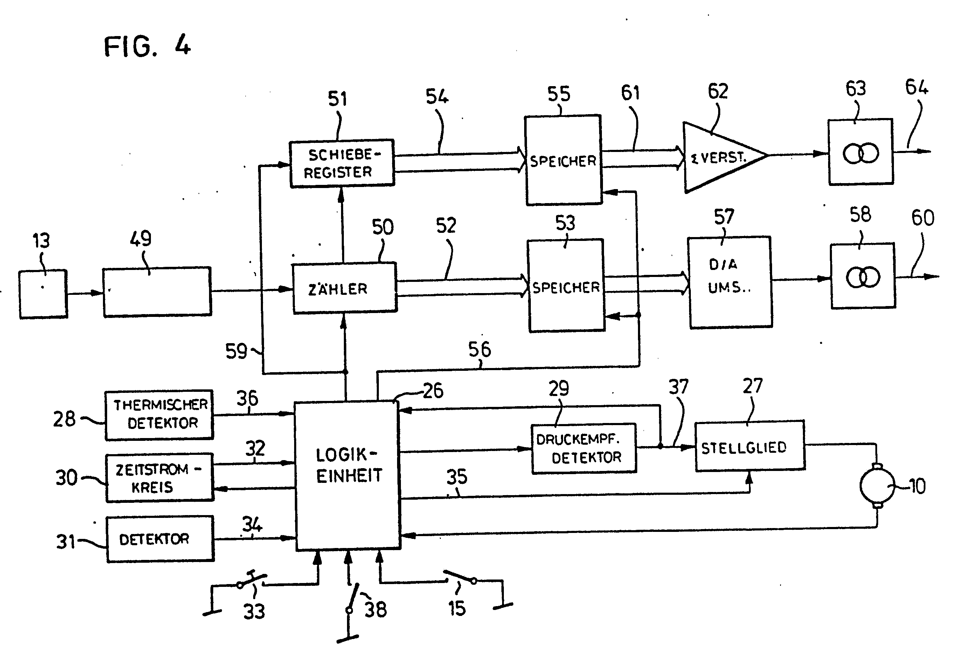

Am Lagerbock 8 ist weiter ein Endschalter 15 angeordnet, welcher den Motor 10 abschaltet, wenn sich die Zahnstange 7 von unten nach oben in ihre Ausgangsstellung zurückbewegt hat. Auf der Montageplatte 4 ist ein elektronisches Steuergerät 16 mit einer Vorrichtung zum Stoppen und Umschalten des Motors 10 beim Abwärtsbewegen der Sonde 12 montiert. Die genannte Vorrichtung ist weiter unten mit Bezugnahme auf die Fig. 4 näher beschrieben.

Die Montageplatte 4 wird an der Säule 3 so befestigt, dass sich das untere Ende der Sonde 12 in ihrer Ruhestellung in einem vertikalen Abstand a von der Oberfläche der Referenzplatte 2 befindet. Beim Absenken der Sonde 12 um den Weg b trifft die Sonde 12 auf die durch eine strichpunktierte Linie 17 angedeutete Schneedecke auf und wird gestoppt. Aus den durch die Lichtschranke 13 erzeugten Signalen wird mit Hilfe einer weiter unten beschriebenen Auswertevorrichung der von der Sonde 12 zuruckgelegte Weg b ermittelt und die Höhe c der sich über der Referenzplatte 2 befindlichen Schneedecke berechnet, indem die Differenz zwischen dem Abstand a und dem Weg b berechnet wird.

Der oben beschriebene Sendeteil ist so kompakt aufgebaut und derart angeordnet, dass er den freien Schneefall auf die Referenzplatte 2 praktisch nicht beeinflusst. Die Fig. 2 zeigt einen Schnitt durch die am unteren Ende der teilweise gezeichneten Zahnstange 7 angeordneten Sonde 12. Sie umfasst ein vorzugsweise aus Kunststoff hergestelltes Schutzgehäuse 18, das eine auf der unteren Seite offene Kammer 19 umgibt, in welcher zwei Temperaturfühler 20 und 21 angeordnet sind. Der eine der Temperaturfühler, nämlich der Kontaktfühler 20, befindet sich im unmittelbaren Bereich der unteren Öffnung des Schutzgehäuses 18 und der andere Temperaturfühler, nämlich der Referenzfühler 21, befindet sich im mittleren Bereich der Kammer 19. Beide Temperaturfühler 20 und 21 weisen eine extrem kleine Zeitkonstante auf und werden im Betriebszustand durch Eigenerwärmung um ca. 20° C gegenüber ihrer Umgebungstemperatur aufgeheizt und sind somit praktisch gleichen Absoluttemperaturen ausgesetzt. Die Temperaturfühler sind vorzugsweise NTC- oder PTC-Widerstände, die im Betrieb zum Erwärmen der Temperaturfühler von einem relativ grossen Strom durchflossen sind.

Beim Absenken der Sonde 12 berührt der Kontaktfühler 20 das zu messende Medium Schnee zuerst und es entsteht infolge grösserer Wärmeableitung eine Abkühlung des Kontaktfühlers 20 gegenüber dem Referenzfühler denen die Temperaturfühler 20 und 21 ausgesetzt sind, treten an den Temperaturfühlern unterschiedliche elektrische Spannungen auf und diese Spannungen werden über nicht dargestellte Leiter, die sich durch je einen Träger 22 bzw. 23 für die Temperaturfühler erstrecken, dem elektronischen Steuergerät 16 zugeführt.

Unmittelbar oberhalb des Schutzgehäuses 18 ist ein abgewinkelter Stab 24 am oder in der Zahnstange 7 befestigt. Das nach oben abgebogene Ende 25 des Stabes 24 dient zum Betätigen des Endschalters 15 beim Zurückkehren der Sonde 12 in ihre Ruhestellung.

Anstelle der in Fig. 2 dargestellten Sonde 12 kann vorzugsweise eine in der Fig.3 im Schnitt gezeigte Sonde 12' verwendet werden. In einem am unteren Ende der Zahnstange 7 befestigten, topfförmigen Gehäuse 80 sind ein Infrarotsender 81 und ein Infrarotempfänger 82 angeordnet. Die optischen Achsen 83 und 84 des Infrarotsenders 81 bzw. des Infrarotempfängers 82 stehen schräg zueinander und durchstossen die durch den unteren Rand des Gehäuses 80 definierte Ebene in einem gemeinsamen Punkt 85. Die Anschlussdrähte 86 und 87 für den Infrarotsender 81 und die Anschlussdrähte 87, 88 und 89 für den Infrarotempfänger 82 erstrecken sich durch die hohle Zahnstange 7 und sind mit dem Steuergerät 16 verbunden. Der Infrarotsender 81 und der Infrarotempfänger 82 sind in je einer Aussparung 90 und 91 eines Blockes 92 gehalten, der im Gehäuse 80 befestigt ist. Im Block 92 erstrecken sich von jeder Aussparung 90 und 91 Kanäle 93 bzw. 93' schräg nach unten und entlang den optischen Achsen 83 bzw. 84. Der Block 92 besteht aus einem undurchsichtigen Material, z.B. Metall oder Kunststoff.

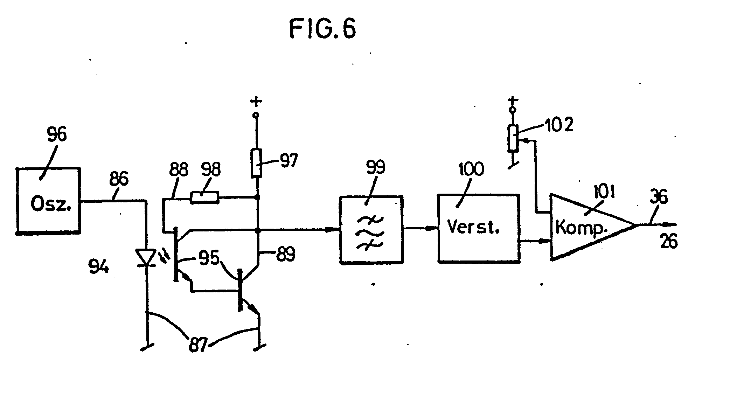

Wenn sich kein Schnee unterhalb des Gehäuses 80 befindet, so treten die vom Infrarotsender 81 ausgesendeten Strahlen aus dem Gehäuse 80 aus und es gelangen keine Strahlen zum Infrarotempfänger 82. Wird das Gehäuse 80 bis zur Oberfläche einer Schneedecke abgesenkt, so befindet sich Schnee beim punkt 85 und ein grosser Teil der vom Infrarotsender 81 ausgesendeten Strahlen wird zum Infrarotempfänger 82 reflektiert. Die Wirkungsweise der Sonde 12' ist weiter unten mit Bezugnahme auf die Fig. 6 näher beschrieben.

Die Fig. 4 zeigt das Blockschema des Sendeteils, d.h. des elektronischen Steuergerätes 16. Das Steuergerät besitzt einen Steuerteil zum Steuern des Motors 10 und einen Umsetzerteil zum Umsetzen des von der Sonde zurückgesetzten Weges in elektrische Signale. Der Steuerteil umfasst eine Logikeinheit 26, ein Stellglied 27 zum Ein- und Ausschalten sowie zum Bestimmen der Drehrichtung des Motors 10, einen elektrisch mit den Temperaturfühlern 20 und 21 verbundenen thermischen Detektor 28, einen auf den auf die Sonde ausgeübten Druck ansprechenden Detektor 29, einen Zeitstromkreis 30 und einen auf die Lufttemperatur ansprechenden Detektor 31. Der Zeitstromkreis 30 gibt über einen Leiter 32 in zeitlich einstellbaren Abständen, z.B. alle 5 bis 60 min., einen Startimpuls an die Logikeinheit 26 ab. Ausnahmsweise kann auch ein Startimpuls mittels einer Starttaste 33 an die Steuereinheit 26 abgegeben werden. Der auf die Lufttemperatur ansprechende Detektor 31 erzeugt ein Sperrsignal, wenn die Lufttemperatur grösser als beispielsweise etwa 5° C ist. Das Sperrsignal wird über einen Leiter 34 der Logikeinheit zugeführt. Nach dem Eintreffen des Startimpulses in der Logikeinheit 26 und wenn kein Sperrsignal anliegt, wird das Stellglied 27 über ein Signal auf dem Leiter 35 so beeinflusst, dass der Motor l0 in derjenigen Richtung dreht, damit die Sonde 12 abgesenkt wird.

Wird der Startimpuls durch die Starttaste 33 ausgelöst, so wird der Motor 10 eingeschaltet, auch wenn der auf die Lufttemperatur ansprechende Detektor 31 ein Sperrsignal an die Logikeinheit 26 abgibt. Dies ermöglicht eine Funktionskontrolle der Einrichtung.

Trifft die Sonde 12 beim Absenken auf die Oberfläche der Schneedecke auf, so erzeugt der thermische Detektor 28 ein Stoppsignal, das der Logikeinheit 26 über einen Leiter 36 zugeführt wird. Nach dem Eintreffen des Stoppsignals in der Logikeinheit 26 beeinflusst diese das Stellglied 27 in der Weise, dass das Stellglied 27 die dem Motor zugeführte Spannung umpolt, wodurch der Motor zuerst gestoppt wird und anschliessend in der anderen Richtung dreht. Dies bewirkt, dass die Sonde 12 wieder in ihre Ruhestellung zurückbewegt wird.

Trifft die Sonde 12 beim Absenken auf einen Widerstand, weil sie entweder auf eine gefrorene Schneedecke oder, wenn sich kein Schnee auf der Referenzplatte 2 befindet, direkt auf diese selbst auf, so spricht anstelle des thermischen Detektors 28 der auf Druck ansprechende Detektor 29 an und erzeugt ebenfalls ein Stoppsignal, welches über einen Leiter 37 direkt dem Stellglied 27 zum Stoppen und Umschalten des Motors 10 zugeführt wird. Das vom Detektor 29 erzeugte Stoppsignal wird gleichzeitig auch der Logikeinheit 26 zugeleitet.

In Ausnahmefällen kann ein Stoppsignal durch eine Stopptaste 38 ausgelöst werden.

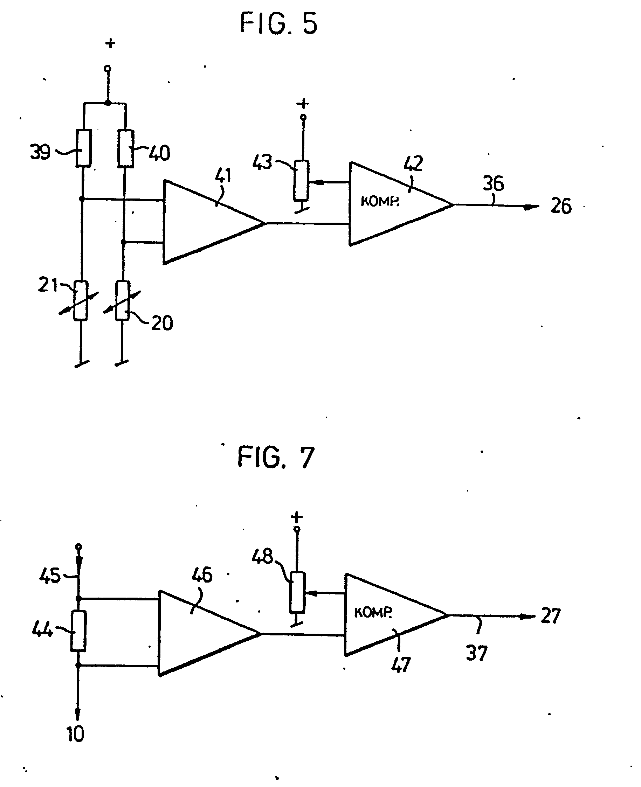

Die Fig. 5 zeigt eine Ausführungsform des thermischen Detektors 28. Der Kontaktfühler 20 und der Referenzfühler 21 der Sonde 12 sind NTC- oder PTC-Widerstände, die je über einen Widerstand 39 bzw. 40 an eine mit + bezeichnete Spannungsquelle angeschlossen sind. Der Verbindungspunkt zwischen dem Widerstand 39 und dem Referenzfühler 21 ist mit dem ersten Eingang eines Differenzverstärkers 41 verbunden und der Verbindungspunkt zwischen dem Widerstand 40 und dem Kontaktfühler 20 ist mit dem zweiten Eingang des Differenzverstärkers 41 verbunden. Der Ausgang des Differenzverstärkers ist an den einen Eingang eines Komparators 42 angeschlossen. Dem anderen Eingang des Komparators 42 wird eine Bezugsspannung vom Abgriff eines Potentiometers 43 zugeführt.

Der Ausgang des Komparators 42 ist an den Leiter 36 angeschlossen, welcher das Ausgangssignal des Komparators 42, das das obengenannte Stoppsignal ist, der Logikeinheit 26 zuleitet. Solange der Kontaktfühler 20 und der Referenzfühler 21 der gleichen Temperatur ausgesetzt sind, erzeugt der Differenzverstärker 41 kein Signal und am Ausgang des Komparators 42 ist ebenfalls kein Stoppsignal vorhanden. Wenn jedoch der Kontaktfühler 20 mit Schnee in Berührung kommt, so kühlt er sich ab und am Ausgang des Differenzverstärkers 41 tritt eine Ausgangsspannung auf, und sobald diese Ausgangsspannung die am Potentiometer 43 einstellbare Bezugsspannung überschreitet, erzeugt der Komparator 42 an seinem Ausgang das Stoppsignal.

Anstelle des thermischen Detektors 28 kann ein Reflexionsdetektor verwendet werden, dessen Blockschema in der Fig. 6 dargestellt ist. Der Reflexionsdetektor umfasst den in der Fig. 3 gezeigten Infrarotsender 81 und den Infrarotempfänger 82. Der Infrarotsender wird durch eine Leuchtdiode 94 und der Infrarotempfänger durch einen Darlington-Phototransistor 95 gebildet. Um den Reflexionsdetektor gegenüber Fremdlicht unwirksam zu machen, wird das von der Leuchtdiode 94 ausgesendete Infrarotlicht moduliert, d.h. die Leuchtdiode 94 wird von einem Oszillator 96 gespiesen, der Rechteckimpulse mit einer vorgegebenen Impulsfrequenz erzeugt. Die Rechteckimpulse werden der Leuchtdiode 94 über den Anschlussdraht 86 zugeführt und der andere Anschlussdraht 87 ist mit Masse verbunden.

Wenn sich Schnee am weiter oben genannten Punkt 85 befindet, werden die modulierten Strahlen zum Darlington-Phototransistor 95 reflektiert. Dem Darlington-Phototransistor 95 wird die Betriebsspannung über einen Kollektorwiderstand 97 und den Anschlussdraht 89 zugeführt. Der Emitter des einen Transistors ist über den Anschlussdraht 87 mit der Masse verbunden. Die Basis des anderen Transistors ist über einen Widerstand 98 und den Anschlussdraht 88 vorgespannt. Am Verbindungspunkt der Kollektoren der beiden Transistoren und des Kollektorwiderstandes 97 tritt eine zum modulierten Photostrom proportionale Spannung auf, die einem Band pass 99 zugeführt wird.

Die Mittenfrequenz des Bandpasses entspricht der Impulsfolgefrequenz und die ausgesiebten Wechselspannungssignale werden anschliessend in einem Verstärker 100 verstärkt. Der Ausgang des Verstärkers 100 ist mit einem der beiden Eingänge eines Komparators 101 verbunden. Dem anderen Eingang wird eine Bezugsspannung zugeführt, die an einem Potentiometer 102 abgegriffen wird. Sobald die Ausgangsspannung des Verstärkers grösser ist als die Bezugsspannung, so erzeugt der Komparator 101 an seinem Ausgang das Stoppsignal, das über den Leiter 36 zur Logikeinheit 26 gelangt.

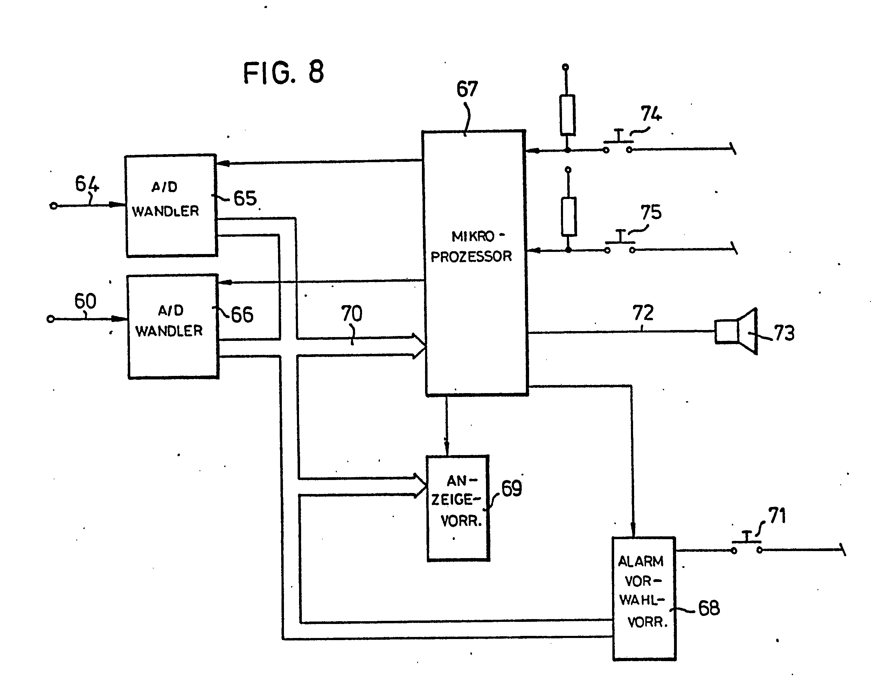

In der Fig. 7 ist eine Ausführungsform des auf Druck ansprechenden Detektors 29 dargestellt. Ein ohmscher Widerstand 44, dessen Widerstandswert relativ klein ist, befindet sich im durch einen Leiter 45 dargestellten Stromkreis des Motors 10. Die beiden Anschlüsse des Widerstandes 44 sind je an einen Eingang eines Differenzverstärkers 46 angeschlossen. Der Ausgang des Differenzverstärkers 46 ist an einen Eingang eines Komparators 47 angeschlossen und der andere Eingang des Komparators ist mit dem Abgriff eines Potentiometers 48 verbunden. Der Ausgang des Komparators ist an den Leiter 37 angeschlossen, welcher das Ausgangssignal, welches das oben genannte Stoppsignal ist, dem Stellglied 27 und der Logikeinheit 26 zuführt. Die am Potentiometer 48 abgegriffene Bezugsspannung ist grösser als die Ausgangsspannung des Differenzverstärkers 46, wenn der Motor 10 die Zahnstange 7 antreibt, ohne dass diese behindert wird. Trifft die Zahnstange 7 bzw. die Sonde 12 oder 12' auf ein hartes Hindernis auf, so wird der Motor 10 mehr belastet und der durch den Motor 10 fliessende Strom steigt an und somit wird die Ausgangsspannung des Differenzverstärkers 46 grösser. Diese Ausgangsspannung übersteigt die Bezugsspannung und der Komparator 47 erzeugt das Stoppsignal.

Das in der Fig. 4 dargestellte Steuergerät besitzt nebst dem weiter oben beschriebenen Steuerteil auch den in der oberen Hälfte der Fig. 4 gezeichneten Umsetzer zum Umsetzen der vom zurückgelegten Weg der Sonde 12 bzw. 12' abhängigen elektrischen Signale. Die von der Lichtschranke 13 erzeugten Impulse werden in einem Impulsformer 49 geformt und verstärkt. Danach gelangen die verstärkten Impulse zu einem Zähler 50, wobei beispielsweise je ein Impuls erzeugt wird, wenn die Zahnstange 7 um einen Millimeter verschoben wird. Der Zähler kann ein 8-Bit-Binärzähler sein, von dem die ersten 127 Zählschritte benutzt werden. Nach jedem Ueberlauf des Zählers 50, d.h. jedes mal wenn die Zahnstange 7 um eine Strecke von 128 mm ausgefahren wird, wird ein Bit in ein Schieberegister 51 eingegeben, das eine Aufnahmekapazität von beispielsweise 8 Bit aufweist.

Der Zählstand des Zählers 50 wird über eine Mehrfachleitung 52 parallel in einen Speicher 53 und die im Schieberegister 51 gespeicherte Information über eine Mehrfachleitung 54 in einen zweiten Speicher 55 übertragen und in diese Speicher eingeschrieben, wenn die Speicher über einen Leiter 56 ein Einschreibesignal von der Logikeinheit 26 erhalten. Die Logikeinheit 26 erzeugt das Einschreibesignal, nachdem das Stoppsignal entweder durch den thermischen Detektor 28 oder den auf Druck ansprechenden Detektor 29 erzeugt worden ist.

Der Zählstand im Zähler 50 wird auf 0 gesetzt und die im Schieberegister 51 gespeicherte Information wird jedesmal gelöscht, wenn dem Zähler 50 und dem Schieberegister 51 über einen Leiter 59 ein Rücksetzsignal zugeführt wird. Das Rücksetzsignal wird von der Logikeinheit 26 erzeugt, wenn der Endschalter 15 betätigt wird, d.h. wenn die Sonde 12 in ihre Ruhelage zurückgekehrt ist.

Die Ausgänge des Speichers 53 sind mit einem Digital/Analog-Umsetzer 57 verbunden, der in Abhängigkeit des gespeicherten Zählstandes ein analoges Spannungssignal erzeugt. Mit dem analogen Spannungssignal wird eine steuerbare Stromquelle 58 gesteuert. Die Stromquelle 58 liefert für jeden Wert des analogen Spannungssignales einen definierten Strom an eine Ausgangsleitung 60.

Der steuerbare Bereich der Stromquelle 58 beträgt beispielsweise 0 - 5 mA. Beim Zählstand 0 des Zählers 50 wird kein Strom von der Stromquelle 58 an die Ausgangsleitung 60 abgegeben und beim Zählstand 127, was bedeutet, dass die Sonde um 128 mm oder ein Vielfaches davon abgesenkt wurde, gibt die Stromquelle 58 einen Strom von 5 mA an die Ausgangsleitung 60 ab. Mit anderen Worten heisst dies, dass pro mm ausgefahrene Länge der Zahnstange 7 der von der Stromquelle 58 abgegebene Strom um abgerundet 39 $\mu A$ vergrössert wird.

Zum Ermitteln, um wieviele ganze Vielfache von 128 mm die Sonde 12 abgesenkt worden ist, wird wie oben erwähnt bei jedem Ueberlauf des Zählers 50 ein Bit in das Schieberegister 51 eingeschrieben. Die Ausgänge der Speicherplätze des Schieberegisters 51 sind über eine Mehrfachleitung 61 mit einem Summenverstärker 62 verbunden. Mit der Ausgangsspannung des Summenverstärkers 62 wird eine zweite Stromquelle 63 angesteuert, welche in Abhängigkeit der im Schieberegister 51 bzw. dem Speicher 55 gespeicherten Anzahl Bits einen Strom zwischen 0 bis 4,8 mA auf eine zweite Ausgangsleitung 64 abgibt. Wenn kein Bit im Speicher 55 eingeschrieben ist, so gibt die Stromquelle 63 keinen Strom ab und für jedes ganze Vielfach von 128 mm des ausgefahrenen Weges der Sonde 12 wird der von der Stromquelle 63 abgegebene Strom um 0,6 mA vergrössert. Wenn beispielsweise in der Ausgangsleitung 64 ein Strom von 3,6 mA und in der Ausgangsleitung 60 ein Strom von 2,5 mA fliesst, so bedeutet dies, dass die Sonde 6 x 128 mm + 64 mm = 832 mm nach unten ausgefahren wurde. Dies würde bedeuten, dass wenn der Abstand a zwischen dem unteren Ende der Sonde 12 und der Referenzplatte 2 1000 mm beträgt, dass die Schneedecke 1000 mm-832 mm = 168 mm dick wäre.

Der Zählstand des Zählers 50 wird im Speicher 53 und die im Schieberegister 51 gespeicherte Information im Speicher 55 solange gespeichert, bis beim nächsten Ueberwachungsintervall wieder ein neues Einschreibesignal diesen Speichern zugeführt wird. Dementsprechend fliessen die entsprechenden Ströme in den beiden Ausgangsleitungen 60 und 64 bis ein neues Ueberwachungsintervall durch den Zeitstromkreis 30 eingeleitet wird.

Die beiden Ausgangsleitungen 60 und 64 führen zu einem in der Fig. 8 dargestellten, mehr oder weniger vom Sendeteil entfernten Empfangsteil, der zwei Analog/ Digital-Umsetzer 65 und 66, eine durch einen Mikroprozessor 67 gebildete Auswertevorrichtung, eine Alarmvorwahlvorrichtung 68 und eine Anzeigevorrichtung 69 umfasst. Der Analog/Digital-Umsetzer 65 setzt den auf der Ausgangsleitung 64 eintreffenden analogen Strom in einen Digitalwert um, welcher im vorliegenden Beispiel einem ganzzahligen Vielfach von 128 mm entspricht. Dieser Digitalwert wird über einen Datenbus 70 in den Mikroprozessor 67 eingegeben. Der Analog/Digital-Umsetzer 66 setzt den auf der Ausgangsleitung 60 eintreffenden analogen Strom in einen Digitalwert um, welcher im vorliegenden Beispiel einem Wert von 0 bis 127 mm entspricht. Dieser Digitalwert wird ebenfalls über den Datenbus 70 in den Mikroprozessor 67 eingegeben.

Aus diesen Digitalwerten berechnet der Mikroprozessor 67 unter Beizug eines digitalen Referenzwertes die Dicke der Schneedecke. Die berechneten Daten über die Dicke der Schneedecke werden über den Datenbus 70 der Anzeigevorrichtung 69 zugeführt und von dieser direkt in einer Längeneinheit, z.B. mm oder cm, angezeigt. Mit einer Einstelltaste 71 kann die Alarmvorwahlvorrichtung 68 auf eine gewünschte Dicke der Schneedecke voreingestellt werden, so dass bei Erreichen der voreingestellten Dicke ein Alarmsignal ausgelöst wird. Die entsprechenden Vorwahldaten werden von der Alarmvorwahlvorrichtung 68 über den Datenbus 70 der Anzeigevorrichtung 69 zum Anzeigen der vorgewählten Dicke und dem Mikroprozessor 67 zum Erzeugen des Alarmsignales zugeleitet, wenn die berechnete Dicke der Schneedecke die vorgewählte Dicke erreicht oder überschreitet. Das Alarmsignal wird über einen Leiter 72 einer akustischen und/oder optischen Alarmvorrichtung 73 zugeleitet.

Mittels eines Schalters 74 kann die akustische Alarmabgabe unterdrückt werden. Durch Betätigen einer weiteren Taste 75 wird der Mikroprozessor 67 so beeinflusst, dass als neuer Referenzwert die Differenz zwischen dem Abstand a und der zuletzt berechneten Dicke der Schneedecke den nachfolgenden Berechnungen zugrunde gelegt wird. Dies ermöglicht das Bestimmen der Dicke einer weiteren Schneedecke, welche auf der ersteren abgelagert worden ist. Auf diese Weise ist es nicht notwendig, dass nach jeder Alarmgabe die Referenzplatte 2 vom darauf abgelagerten Schnee befreit werden muss.

In vielen Fällen genügt eine gröbere Anzeige der Höhe der Schneedecke. Die Lichtschranke 13 kann beispielsweise so ausgelegt sein, dass sie lediglich alle 5 mm pro ausgefahrene Wegstrecke der Sonde 12 bzw. 12' einen Impuls erzeugt. In diesem Fall können der Umsetzerteil zum Umsetzen des von der Sonde 12 bzw. 12' zurückgelegten Weges in elektrische Signale und der Empfangsteil wesentlich einfacher aufgebaut sein. Der in der oberen Hälfte der Fig. 4 dargestellte Umsetzerteil enthält dann lediglich den Zähler 50, den Speicher 53, den Digital/Analog-Umsetzer 57 und die steuerbare Stromquelle 58. Das Schieberegister 51, der Speicher 55, der Summenverstärker 62 und die steuerbare Stromquelle 63 entfallen. Der auf der linken Seite der Fig. 8 dargestellte Empfangsteil umfasst dann nur noch den Analog/Digitalwandler 66. Weil nur noch die steuerbare Stromquelle 58 und der eine Analog/Digitalwandler 66 vorhanden ist, wird nur noch die eine Ausgangsleitung 60 benötigt.

Wird wie weiter oben angeführt, als Zähler 50 ein 8-Bit-Binärzähler verwendet und wenn der steuerbare Bereich der Stromquelle 58 beispielsweise 0 - 5 mA beträgt, so kann die Sonde 12 bzw. 12' beispielsweise um 635 mm abgesenkt werden. Diese ausfahrbare Wegstrecke ergibt sich aus der Anzahl Zählschritte des Zählers 50 (127) mal die Anzahl mm pro Zählschritt (5 mm) und ergibt 127 x 5 mm = 635 mm. Dementsprechend liefert die Stromquelle 58 einen Strom von 5 mA, wenn die Sonde 12 bzw. 12' um 635 mm abgesenkt worden ist. Dies bedeutet, dass der von der Stromquelle 58 abgegebene Strom um je 39 µA pro 5 mm ausgefahrene Länge zunimmt.

Im Empfangsteil, Fig. 8, wird entsprechend dem Strom auf dem Leiter 60 dieser analoge Wert durch den Analog/Digitalwandler 66 in einen Digitalwert umgesetzt und über den Datenbus 70 dem Mikroprozessor 67 zugeführt.

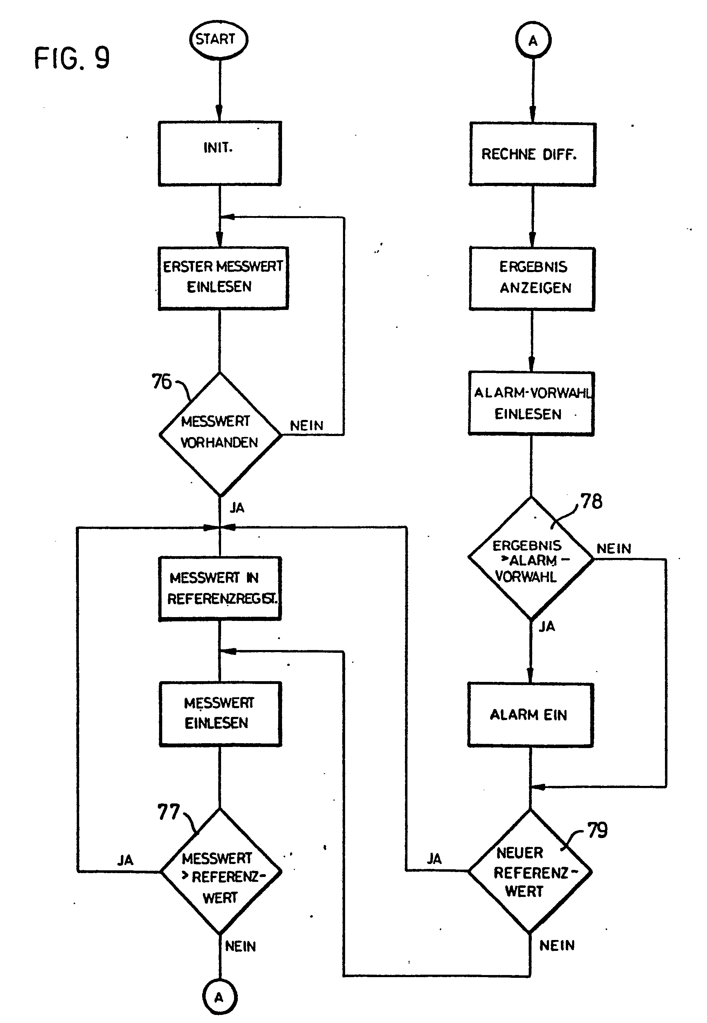

Die Fig. 9 zeigt das Flussdiagramm, gemäss welchem der entsprechend programmierte Mikroprozessor 67 arbeitet. Der Mikroprozessor 67 kann ein einfacher 8-Bit-Mikroprozessor vom Typ Z8 sein. Nach dem Start erfolgt die Initialisierung. Ein erster Messwert, d.h. die Summe der von den Analog/Digital-Umsetzern 65 und 66 ausgegebenen Digitalwerte, wird in einen ersten Speicher des Mikroprozessors 67 eingelesen. Dieser erste Messwert entspricht beispielsweise dem Abstand a zwischen dem unteren Ende der Sonde 12 und der Referenzplatte 2, weil sich noch kein Schnee auf der Referenzplatte 2 befindet. Eine Entscheidungsstelle 76 prüft, ob schon vorher ein Messwert gespeichert war. Ist dies nicht der Fall, so wird ein zweiter Messwert in den Speicher eingelesen, welcher zweite Messwert, wenn noch kein Schnee auf die Referenzplatte gefallen ist, dem ersten Messwert entspricht. Nach dem Einlesen des anstehenden zweiten Messwertes in den genannten Speicher, stellt die Entscheidungsstelle 76 fest, dass schon ein Messwert gespeichert ist und veranlasst, dass der zuerst gespeicherte Messwert in einem Referenzregister des Mikroprozessors 67 als Referenzwert gespeichert wird.

Eine weitere Entscheidungsstelle 77 prüft, ob der zuletzt eingelesene Messwert grösser oder kleiner als der Referenzwert ist. Wenn der zuletzt eingegebene Messwert grösser oder gleich dem Referenzwert ist, so wird der anstehende Messwert wiederum eingelesen und erneut mit dem Referenzwert verglichen. Dieser Vorgang wird periodisch alle 10 bis 60 Sekunden wiederholt, bis verursacht durch Schneefall der anstehende Messwert sich ändert, d.h. kleiner wird. Beim Vergleich mit dem Referenzwert stellt dann die Entscheidungsstelle 77 fest, dass der zuletzt eingegebene Messwert nicht mehr gleich oder grösser sondern kleiner ist als der Referenzwert. Daraufhin veranlasst die Entscheidungsstelle 77, dass die Differenz zwischen dem Referenzwert und dem zuletzt eingelesenen Messwert ausgerechnet und das Ergebnis durch die Anzeigevorrichtung 69 angezeigt wird. Dieses Ergebnis entspricht der Dicke der sich auf der Referenzplatte 2 abgelagerten Schneedecke.

Anschliessend wird die Alarmvorwahlvorrichtung 68 abgefragt, welche Alarmvorwahl mit der Taste 71 eingegeben wurde. Diese Alarmvorwahl, d.h. jene Dicke der Schneedecke, bei welcher Dicke ein Alarmsignal ausgelöst werden soll, wird in einen weiteren Speicher des Mikroprozessors 67 eingegeben. Eine weitere Entscheidungsstelle 78 prüft ob das berechnete Ergebnis, d.h. die Dicke der effektiv auf der Referenzplatte 2 liegenden Schneedecke, grösser oder kleiner ist als die Alarmvorwahl, d.h. jene Dicke der Schneedecke, bei welcher das Alarmsignal ausgelöst werden soll. Stellt die Entscheidungsstelle 78 fest, dass das berechnete Ergebnis nicht grösser ist als die Alarmvorwahl, so wird eine weitere Entscheidungsstelle 79 eingeschaltet um zu prüfen, ob ein neuer Referenzwert berücksichtigt werden soll. Ist dies nicht der Fall, so veranlasst die Entscheidungsstelle 79,dass der anstehende Messwert neu eingelesen wird und der oben beschriebene Vorgang wird wiederholt. Stellt die Entscheidungsstelle 79 fest, dass ein neuer Referenzwert berücksichtigt werden soll, was durch Betätigung der Taste 75 befohlen werden kann, so veranlasst die Entscheidungsstelle 79, dass der anstehende Messwert in das Referenzregister eingegeben und dort gespeichert wird.

Stellt die Entscheidungsstelle 78 fest, dass das berechnete Ergebnis grösser ist als die Alarmvorwahl, so leitet sie die Erzeugung eines Alarmsignales ein, wodurch ein optischer und/oder akustischer Alarm ausgelöst wird. Daran anschliessend wird, wenn kein neuer Referenzwert verlangt wird, der anstehende Messwert wie oben angeführt weiterverarbeitet.

Die oben zuerst beschriebene Einrichtung vermag Schneedecken von nur 1 mm Dicke sicher und zuverlässig festzustellen. Dies gestattet dem Einsatzleiter einer Schneeräumungsequipe festzustellen, um welche Zeit ein Schneefall beginnt, indem er mit der Taste 71 die Alarmvorwahl an der Alarmvorwahlvorrichtung 78 auf 1 mm einstellt. Sobald die Dicke der gefallenen Schneedecke 1 mm erreicht, wird der Einsatzleiter durch die Einrichtung gewarnt, dass Schneefall eingesetzt hat. Danach kann der Einsatzleiter die Alarmvorwahl auf denjenigen Wert, z.B. 40 mm einstellen, welchen Wert er als richtig betrachtet, um mit den Schneeräumungsarbeiten zu beginnen. Wenn danach die Schneedecke die vorgewählte Dicke erreicht, wird der Einsatzleiter erneut alarmiert und er kann die Schneeräumung einleiten. Wenn der Schnee von den Strassen geräumt ist, betätigt der Einsatzleiter die Taste 75. Damit wird der zuletzt anstehende Messwert als neuer Referenzwert übernommen und der eben beschriebene Vorgang kann von neuem beginnen, ohne dass der zuvor auf der Referenzplatte 2 abgelagerte Schnee weggeräumt wird.

Wenn es andererseits nach der ersten Alarmmeldung des Schneefallbeginns und der erfolgten Neueinstellung der Alarmvorwahl nicht mehr stark weiterschneit oder sogar aufhürt, wird kein weiterer Alarm mehr ausgelöst.

Wenn sich bereits eine Schneedecke auf der Referenzplatte 2 befindet und die Dicke dieser Schneedecke sich durch ihr Eigengewicht, Tauen, Sonnenschein oder Regen reduziert, so kann durch Betätigen der Taste 71 jederzeit ein neuer, den geänderten Verhältnissen angepasster Referenzwert in das Referenzregister eingegeben werden, so dass sich die nachfolgenden Messungen auf diesen neuen Referenzwert beziehen.

Die Einrichtung arbeitet bei allen Schneeverhältnissen zuverlässig, indem, solange der Schnee weich ist, die Sonde 12 auf die von den Temperaturfühlern 20 und 21 festgestellte Temperaturdifferenz bzw. die Sonde 12' auf die durch den Schnee bedingte Lichtreflexion oder bei gefrorener Schneedecke der druckempfindliche Detektor 29 anspricht.

## Patentansprüche

1. Maschinelles Verfahren zum Messen der Dicke einer Schneedecke, die sich auf einer dem freien Schneefall ausgezeichnet, dass eine Sonde (12; 12') von einer definierten Ruhestellung aus auf die Referenzplatte (2) abgesenkt, dass die Abwärtsbewegung der Sonde beim Auf-Schneedecke gestoppt, dass der von der Sonde zurückgelegte Weg ermittelt, dass mit Hilfe des ermittelten Weges die Dicke der Schneedecke berechnet und dass die Sonde nach dem Stoppen der Abwärtsbewegung in ihre Ruhestellung zurückbewegt wird.

2. Verfahren nach Anspruch 1, dadurch gekennzeichnet, dass die von der Sonde zurückgelegte Wegstrecke in elektrische Meßsignale umgesetzt wird und dass die Meßsignale einer von der Sonde entfernt angeordneten Auswertevorrichtung (67) zur Ermittlung des zurückgelegten Weges der Sonde und zur Berechnung der Dicke der Schneedecke zugeführt werden.

3. Verfahren nach Anspruch 1 oder 2, dadurch gekennzeichnet, dass wahlweise für nachfolgende Berechnungen der Dicke einer nachfolgend abgelagerten Schneedecke die Oberfläche der vorangehend abgelagerten

4. Einrichtung zum Durchführen des Verfahrens nach Anspruch 1, mit einer dem freien Schneefall ausgesetzten Referenzplatte (2), gekennzeichnet durch (12; 12'), eine Vorrichtung (7, 8) zum Führen der Sonde längs einer zur Referenzplatte führenden Bahn, eine Antriebsvorrichtung (9, 10, 11) zum Bewegen der Sonde von einer definierten Ruhestellung aus längs der genannten Bahn, eine Vorrichtung (26, 29, 27) zum Stoppen und Umschalten der Antriebsvorrichtung, wenn die Sonde auf der Referenzplatte oder der Schneedecke auftrifft, Mittel (13, 14) zum Erzeugen von elektrischen Signalen in Abhängigkeit des von der Sonde von der Ruhestellung nach unten zurückgelegten Weges, eine Auswertevorrichtung (67) zum Ermitteln des zurückgelegten Weges und zum Berechnen der Dicke der Schneedecke mit Hilfe des genannten Weges und eine Vorrichtung (69) zum Anzeigen der berechneten Höhe der Schneedecke.

5. Einrichtung nach Anspruch 4, dadurch gekennzeichnet, dass Mittel (29; 44, 46, 47) zum Stoppen der Abwärtsbewegung der Sonde (12, 12') vorhanden sind, wenn die Sonde auf eine harte Unterlage auftrifft.

6. Einrichtung nach Anspruch 5, dadurch gekennzeichnet, dass die Stoppmittel einen im Speisestromkreis (45) eines Motors (10) angeordneten Widerstand (44), einen Differenzverstärker (46), von dessen zwei Eingängen je einer mit einem der beiden Anschlüsse des Widerstandes verbunden sind, und einen Komparator (47) umfassen, dessen einer Eingang mit dem Ausgang des Differenzverstarkers verbunden und an dessen anderem Eingang eine Bezugsspannung angelegt ist.

7. Einrichtung nach Anspruch 4, 5 oder 6 dadurch gekennzeichnet, dass die Sonde (12) ein auf der Unterseite offenes Schutzgehäuse (18), zwei innerhalb des Gehäuses angeordnete temperaturempfindliche Elemente (20, 21) und zwei Träger (22, 23) für die Elemente aufweist, und dass das eine der Elemente im Bereich der unteren Oeffnung des Gehäuses und das andere Element gegenüber dem einen zurückversetzt im Innern des Gehäuses angeordnet ist.

8. Einrichtung nach Anspruch 4, 5 oder 6, dadurch gekennzeichnet, dass die Sonde (12') ein auf der Unterseite offenes Gehäuse (80), einen Infrarotsender (81) und einen Infrarotempfänger aufweist, und dass der Infrarotsender und der -empfänger so im Gehäuse (80) angeordnet sind, dass sich die optischen Achsen (83, 84) des Senders und des Empfängers in einem gemeinsamen Punkt (85) innerhalb der durch den Rand der Oeffnung des Gehäuses definierten Ebene schneiden.

9. Einrichtung nach einem der Ansprüche 4 bis 8, dadurch gekennzeichnet, dass die Führungsvorrichtung eine in einem Lagerbock (8) vertikal verschiebbare Zahnstange (7) umfasst und dass die Antriebsvorrichtung einen vorzugsweise ein Reduktionsgetriebe aufweisenden Elektromotor (10) mit einer sich in den Lagerbock erstreckenden Antriebswelle (9) und ein drehfest auf die Antriebswelle aufgesetztes und in die Verzahnung der Zahnstange (7) eingreifendes Zahnrad (11) enthält.

10. Einrichtung nach Anspruch 9, dadurch gekennzeichnet, dass die Mittel zum Erzeugen von elektrischen Signalen in Abhängigkeit des von der Sonde nach unten zurückgelegten Weges eine Lichtschranke (13) und eine drehfest auf die Antriebswelle aufgesetzte Lochscheibe (14) umfassen.

11. Einrichtung nach einem der Ansprüche 4 bis 10, dadurch gekennzeichnet, dass die Auswertevorrichtung einen Mikroprozessor (67) umfasst und dass der Mikroprozessor so programmiert ist, dass er aus den vom zurückgelegten Weg der Sonde abhängigen Signalen die Dicke der sich auf der Referenzplatte befindlichen Schneedecke berechnet.

12. Einrichtung nach Anspruch 11, dadurch gekennzeichnet, dass eine Vorrichtung zum Uebertragen der vom zurückgelegten Weg der Sonde abhängigen Signale vorhanden ist, dass die Uebertragungsvorrichtung einen Zähler (50) zum Zählen der während der Abwärtsbewegung der Sonde von der Lichtschranke abgegebenen Impulse, einen Speicher (53) zum Speichern des Zählstandes des Zählers beim Stoppen der Sonde, einen Digital/Analog-Umsetzer (57) zum Umsetzen des digitalen Zählstandes in eine analoge Steuerspannung, eine steuerbare Stromquelle (58) zum Einspeisen eines von der Steuerspannung abhängigen Stromes in eine Ausgangsleitung (60), eine am anderen Ende der Ausgangsleitung angeschlossenen Analog/Digital-Wandler (66) zum Umwandeln des Wertes des in der Ausgangsleitung fliessenden Stromes in einen vom Mikroprozessor verarbeitbaren Digitalwert aufweist.

**Claims**

1. Mechanical process for measuring the thickness of a blanket of snow which has been deposited on a reference plate exposed to the free fall of snow, characterized in that a probe (12; 12') is lowered starting from a defined rest position towards the reference plate (2), that the downward movement of the probe is stopped upon striking the reference plate or the surface of the blanket of snow, that the distance travelled by the probe is determined, that the thickness of the blanket of snow is calculated with the aid of the distance determined, and that the probe is returned to its rest position after stopping of the downward movement.

2. Process according to claim 1, characterized in that the distance travelled by the probe is converted into electric measurement signals, and that the measurements signals are supplied to an evaluating device (67) disposed remote from the probe for determining the distance travelled by the probe and for calculating the thickness of the blanket of snow.

3. Process according to claim 1 or 2, characterized in that, alternatively, for subsequent calculations of the thickness of a subsequently deposited blanket of snow, the surface of the precedingly deposited blanket of snow is used as the plane of reference.

4. Apparatus for carrying out the process according to claim 1, having reference plate (2) exposed to the free fall of snow, characterized by a robe (12; 12') disposed above the reference plate, a device (7, 8) for guidng the probe along a path leading to the reference plate, a drive device (9, 10, 11) for moving the probe starting from a defined rest position along the said path, a device (26, 29, 27) for stopping and switching-over the drive evice when the probe strikes the reference plate or the blanket of snow, means (13, 14) for generating electric signals as a function of the distance travelled downward by the probe from the rest position, an evaluating device (67) for determining the distance travelled and for calculating the thickness of the blanket of snow with the aid of the said distance, and a device (69) for indicating the calculated height of the blanket of snow.

5. Apparatus according to claim 5, characterized in that there are means (29; 44, 46, 47) for stopping the downward movement of the probe (12, 12') when the probe strikes a hard substrate.

6. Apparatus according to claim 5, characterized in that the stopping means comprise a resistor (44) disposed in the feed circuit (45) of a motor (10), a differential amplifier (46), each of the two inputs of which is respectively connected to one of the two terminals of the resistor, and a comparator (47), one input of which is connected to the output of the differential amplifier, and to the other input of which a reference voltage is applied.

7. Apparatus according to claim 4, 5, or 6, characterized in that the probe (12) has a protective housing (18) open at the bottom, two thermosensitive elements (20, 21) disposed within the housing, and two supports (22, 23) for the elements, and that one of the elements is disposed in the region of the bottom opening of the housing and the other element is disposed opposite the first one, set back in the interior of the housing.

8. Apparatus according to claim 4, 5, or 6, characterized in that the probe (12') has a housing (80) open at the bottom, an infrared emitter (81), and an infrared receiver, and that the infrared emitter and receiver are so disposed in the housing (80) that the optical axes (83, 84) of the emitter and of the receiver intersect at a common point (85) within the plane defined by the edge of the opening of the housing.

9. Apparatus according to one of the claims 4 to 8, characterized in that the guiding device comprises a rack (7) vertically displaceable in a bearing block (8), and that the drive device contains an electric motor (10), preferably having a reduction gear, with a driving shaft (9) extending into the bearing block and a toothed wheel (11) mounted rotation-fast on the driving shaft and engaging the toothing of the rack (7).

10. Apparatus according to claim 9, characterized in that the means for generating electric signals as a function of the distance travelled downward by the probe comprise a light barrier (13) and a perforated disc (14) mounted rotation-fast on the driving shaft.

11. Apparatus according to one of the claims 4 to 10, characterized in that the evaluating device comprises a microprocessor (67), and that the microprocessor is so programmed that it calculates the thickness of the blanket of snow on the reference plate from the signals dependent on the distance travelled by the probe.

12. Apparatus according to claim 11, characterized in that there is a device for transmitting the signals dependent on the distance travelled by the probe, that the transmitting device has a counter (50) for counting the pulses transmitted by the light barrier during the downward movement of the probe, a memory (53) for storing the count of the counter upon stopping of the probe, a digital-to-analog converter (57) for converting the digital count into an analog control voltage, a controllable current source (58) for feeding into an output line (60) a current dependent upon the control voltage, an analog-to-digital converter (66) connected at the other end of the output line for converting the value of the current flowing in the output line into a digital value processable by the microprocessor.

**Revendications**

1. Procédé mécanique pour la mesure de l'épaisseur d'une couche de neige qui s'est amoncelée sur une plaque de référence exposée à recevoir librement les chutes de neige, caractérisé en ce qu'une sonde (12; 12') est abaissée vers la plaque de référence (2) à partir d'une position de repos définie, en ce que le mouvement descendant de la sonde est stoppée lorsque la sonde rencontre la plaque de référence ou la surface d'une couche de neige, en ce que le chemin parcouru par la sonde est appréhendé, en ce que l'épaisseur de la couche de neige est calculée à l'aide du chemin appréhendé, et en ce que, après l'arrêt de son mouvement descendant, la sonde est ramenée en sa position de repos.

2. Procédé selon la revendication 1, caractérisé en ce que le chemin parcouru par la sonde est transformé en signaux de mesure électriques et en ce que les signaux de mesure sont amenés a un dispositif d'évaluation (67) placé à distance de la sonde, pour saisir le chemin parcouru par la sonde et calculer l'épaisseur de la couche de neige.

3. Procédé selon la revendication 1 ou la revendication 2, caractérisé en ce que, en option, la surface de la couche de neige précédemment amoncelée est utilisée comme plan de référence pour le calcul de l'épaisseur d'une couche de neige amoncelée subséquemment.

4. Dispositif pour la mise en oeuvre du procédé selon la revendication 1, comprenant une plaque de référence (2) exposée à recevoir librement les chutes de neige, caractérisé par une sonde (12; 12') disposée au-dessus de la plaque de référence, un dispositif (7, 8) pour guider la sonde le long d'un chemin menant à la plaque de référence, un dispositif d'entraînement (9, 10, 11) pour le movement de la sonde depuis une position de départ définie le long du dit chemin, un dispositif (26, 29, 27) pour stopper et inverser le dispositif d'entraînement lorsque la sonde arrive sur la plaque de référence ou sur la couche de neige, des moyens (13, 14) pour engendrer des signaux électriques en dépendance du chemin parcouru par la sonde depuis la position de repos vers le bas, un dispositif d'évaluation (67) pour établir le chemin parcouru et pour calculer l'épaisseur de la neige à l'aide du dit chemin, et un dispositif (69) pour indiquer la hauteur de couche de neige calculée.

5. Dispositif selon la revendication 4, caractérisé en ce que des moyens (29, 44, 46, 47) sont prévus pour stopper le mouvement vers le bas de la sonde (12, 12') lorsque la sonde heurte une base dure.

6. Dispositif selon la revendication 5, caractérisé en ce que les moyens de stoppage comprennent une résistance (44) dans le circuit d'alimentation (45) d'un moteur (10), un amplificateur différentiel (46) dont les deux entrées sont reliées respectivement chacune avec une des deux connexions de la résistance, et un comparateur (47) dont une entrée est reliée à la sortie de l'amplificateur différentiel et dont l'autre entrée reçoit une tension de référence.

7. Dispositif selon l'une des revendications 4, 5 ou 6, caractérisé en ce que la sonde (12) présente un boîtier de protection (18) ouvert contre en dessous, deux éléments sensibles à la température (20, 21) disposés à l'intérieur du boîtier, et deux supports (22, 23) pour les éléments, et en ce qu'un des éléments est disposé dans la zone de l'ouverture inférieure du boîtier tandis que l'autre élément se situe par rapport au premier en retrait à l'intérieur du boîtier.

8. Dispositif selon l'une des revendications 4, 5 ou 6, caractérisé en ce que la sonde (12') comprend, dans la partie inférieure ouverte du boîtier (80) un émetteur infrarouge (81) et un récepteur infrarouge, et en ce que l'émetteur et le récepteur infrarouges sont disposés dans le boîtier (80) de façon telle que les axes optiques (83, 84) de l'émetteur et du récepteur se coupent en un point qui est dans le plan défini par le bord de l'ouverture du boîtier.

9. Dispositif selon une des revendications 4 à 8, caractérisé en ce que le dispositif de guidage comprend une crémaillière (7) déplaçable verticalement dans un bloc-palier (8), et en ce que le dispositif d'entraînement a un moteur électrique (10), présentant de préférence un engrenage réducteur, avec un arbre d'entraînement (9) qui s'étend dans le bloc-palier et une roue dentée (11) montée de façon solidaire en rotation sur l'arbre d'entraînement et en engagement avec les dents de la crémaillière (7).

10. Dispositif selon la revendication 10, caractérisé en ce que les moyens pour engendrer des signaux électriques en dépendance du chemin parcouru vers le bas par la sonde comprennent un agencement à faisceau lumineux (13) et un disque perforé (14) monté de façon solidaire en rotation sur l'arbre d'entraînement.

11. Dispositif selon l'une des revendications 4 à 10, caractérisé en ce que le dispositif d'évaluation comprend un microprocesseur (67) et en ce que ce microprocesseur est programmé de façon telle que l'épaisseur de la couche de neige se trouvant sur la plaque de référence soit calculée en fonction des signaux dépendant du chemin parcouru par la sonde.

12. Dispositif selon la revendication 11, caractérisé en ce qu'un agencement de transmission des signaux dépendant du chemin parcouru par la sonde est établi, et en ce que l'agencement de transmission comprend un compteur (50) pour compter les impulsions délivrées durant le mouvement de descente de la sonde, un registre (53) pour enregistrer l'état de comptage du compteur lors de l'arrêt de la sonde, un convertisseur digital/analogique (57) pour transformer l'état de comptage digital en une tension de commande analogique, une source de courant pouvant être commandée (58) pour délivrer un courant dépendant de la tension de commande dans une ligne de sortie (60), un convertisseur analogique/digital (66), branché à l'autre extrémité de la ligne de sortie, pour transformer la valeur du courant circulant dans la ligne de sortie en une valeur digitale apte à être traitée par le microprocesseur.

FIG. 1

FIG. 2

# FIG. 3

FIG. 4

THERMISCHER DETEKTOR — 28

ZEITSTROM-KREIS — 30

DETEKTOR — 31

LOGIK-EINHEIT — 26

DRUCKEMPF. DETEKTOR — 29

STELLGLIED — 27

10

15

38

33

SCHIEBE-REGISTER — 51

ZÄHLER — 50

49

13

SPEICHER — 55

SPEICHER — 53

62 z.VERST.

D/A UMS.. — 57

63 — 64

58 — 60

61

54

52

56

59

35

36

32

34

37

7

# FIG. 5

# FIG. 7

# FIG.6

FIG. 8

FIG. 9